# EUROPEAN PATENT APPLICATION

(11) **EP 4 333 294 A1**
(43) Date of publication of application: **06.03.2024**
(21) Application number: 22192834.4
(22) Date of filing: 30.08.2022
(51) Int. Cl.: H02P 29/60

(54) **MONITORING AND/OR CONTROLLING OF AN ELECTRO-MECHANICAL DEVICE**

(71) Applicant: Siemens Aktiengesellschaft, 80333 München (DE)
(72) Inventor: Erlwein, Matthias, 91330 Eggolsheim OT Weigelshofen (DE); Khalil, Mohamed, 81379 München (DE); Loukrezis, Dimitrios, 80809 München (DE); Ludwig, Christoph Ernst, 81673 München (DE); Malik, Vincent, 80636 München (DE); Wolf Pozzo, Christian Andreas, 90513 Zirndorf (DE); Zacharias, Dominik, 90765 Fürth (DE)
(74) Representative: Siemens Patent Attorneys

(57) **Abstract**

A, preferably computer-implemented, method of monitoring and/or controlling of an electro-mechanical device (10), such as an electrical motor and/or generator, comprising the steps of: determining a first probability distribution (P1) of a virtual measurement variable (V1), e.g., temperature at a predetermined position, of the electro-mechanical device (10), determining a confidence level for a first value of the virtual measurement variable (V1) based on the first probability distribution (P1), changing an operating mode (11, 12) of the electro-mechanical device (10) based on the confidence level and/or displaying an indication (13) on a display (14), the indication (13) instructing a user to change the operating mode (11, 12) of the electro-mechanical device (10).

## Description

### TECHNICAL FIELD

The present disclosure relates to monitoring and/or controlling of an electro-mechanical device, such as an electrical motor or generator.

### BACKGROUND

Heat dissipation is an important issue in designing electro-mechanical systems, such as electrical motors and generators. Electrical losses play a major role in heat dissipation and is the major mechanism ruling the thermal behavior of the electro-mechanical system. The electro-mechanical systems have to be designed, monitored and/or controlled in order to prevent overheating which could lead to system failure.

Accurate description of the thermal behavior of the electro-mechanical system can be beneficial in terms of thermal management, system utilization and last but not least thermal protection of the electro-mechanical system. Electrical motors are one of the most important energy conversion systems used in industry today, cf. inter alia European Patent Application EP1959532A1.

From European patent application EP 21179858 a method and machine control for temperature monitoring of an electro-mechanical device based inter alia on electrical operating data of the device has become known. Based on the operating data, electrical energy losses in the device may be continuously simulated in a spatially resolved manner by means of a simulation model of the device.

Electro-mechanical device, like motors and/or generators, have to operate within a specified range of temperature and if they are overheated the motors run the risk of demagnetization of the magnets and/or stator winding. Failure of an electro-mechanical device can result in failure not only the motor but of a whole production system. In order to avoid possible overheating failures of electrical motors, different kinds of thermal protection sensors are used.

From US patent application US2022163952A1, and patent family member EP3715982A1, a method for providing a virtual sensor in an automation system of an industrial system has become known. A data set which has been generated using a simulation model is provided, wherein the data set produces a unique relationship between possible measurement values of the physical sensor and corresponding output values of the virtual sensor.

### SUMMARY

Monitoring a measurement variable such as a temperature of every critical internal component in an electro-mechanical device is rather costly and could be impossible, as the electro-mechanical device may have to be dismantled in order to place a sensor at the desired positions. It is thus an object to determine an optimal or critical operating mode of an electro-mechanical system. It is yet a further object to adapt a simulation model for a plurality of similar yet different electro-mechanical device. It is a further object to determine simulation model inaccuracies, which for example lead to unacceptable calculation errors. It is a further object to quantify and/or reduce the calculation errors of the simulation model of an electro-mechanical device, e.g., in order to improve operation of the electro-mechanical device.

The object is achieved by the subject-matter as defined by the independent claims. Advantageous embodiments are provided in the dependent claims.

### BRIEF DESCRIPTION OF THE DRAWINGS

- Figure 1: shows an illustration of an electro-mechanical device comprising a panel for monitoring and/or controlling the operation of the electrical motor.
- Figure 2: shows an illustration of components of a motor.
- Figure 3: shows a simulation model of a motor, wherein the simulation model describes an electrical loss.
- Figure 4: shows a further simulation model of a motor, wherein the simulation model describes a heat transfer.
- Figure 5: shows a yet another simulation model of a motor, wherein the simulation model combines the electrical loss model with the heat transfer model.
- Figure 6: shows exemplary method steps according to a first embodiment in an offline phase.
- Figure 7: shows exemplary method steps according to a second embodiment in a calibration phase.
- Figure 8: shows exemplary method steps according to a third embodiment in an operation phase.
- Figure 9: shows an illustration of propagation of uncertainty through a simulation model.
- Figure 10: shows an illustration of an inverse Bayesian analysis.
- Figure 11: shows an illustration of different confidence levels.
- Figures 12: to 18 show method steps according to further exemplary embodiments.

### DETAILED DESCRIPTION

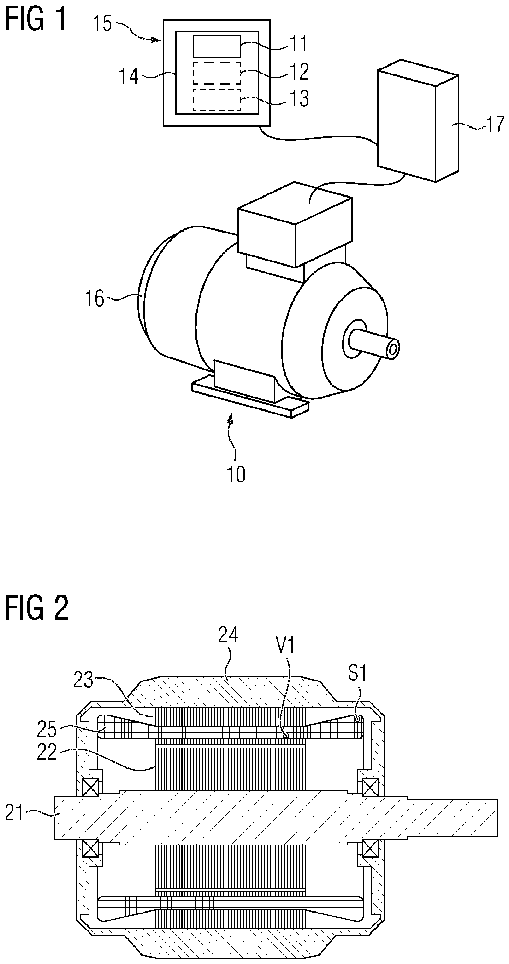

In Figure 1 an illustration of an electro-mechanical device comprising an electrical motor 16, a converter 17 and a panel 15 for monitoring and/or controlling the operation of the electro-mechanical device 10.

To detect the optimal or critical operating conditions of the motor 16, the knowledge of one or more measurement variables, e.g., a temperature, of the motor's components (e.g., bearing, stator and stator winding insulation) may be necessary.

Monitoring the temperature of every critical internal component in the motor 16 is rather costly and could be impossible, as the motor 16 will need to be dismantled to place the sensors. Alternatively, a more cost-effective approach is so-called virtual sensing; an approach through which measurement variables, such as temperatures, at unmeasured positions in the electro-mechanical device, in particular the motor 16, could be estimated using a simulation model.

Thus, in case the measurement variable such as the temperature of a motor component cannot be measured, e.g., due to moving parts or if measurements are economically inconvenient, one or more virtual sensors are used to estimate the temperatures. A virtual sensor thus may provide a virtual measurement variable. The virtual measurement variable may provide (virtual) measurement values, e.g., at a predetermined position of the electro-mechanical device.

To develop such virtual sensors, the precise knowledge of the motor geometry, material properties, and/or operating parameters may be required. Based on this knowledge, (dynamic) simulation models may be created. These simulation models are also referred to as virtual sensors. The simulation model may thus serve to calculate a virtual measurement variable, such as the temperature, at a certain, predetermined position of the motor 16.

For example, in case of electro-mechanical devices such as third-party and/or brownfield motors, the required parameters, such as geometry and material properties, are typically not available. The usage of simulation models of similar motors may thus not be feasible, as simulation model inaccuracies may lead to unacceptable calculation errors. Therefore, a method for quantifying and reducing the calculation errors arising in virtual sensors for electro-mechanical system, in particular third-party motors, is needed.

In Figure 1 a panel 15 for monitoring and/or controlling the operation of the electrical motor 16 is shown. The panel may comprise a display 14 for displaying an indication 13 about an operating state of the electro-mechanical device 10 and in particular the motor 16. Furthermore, the display 14 may serve for controlling the operating state of the electro-mechanical device 10. For example, a first operating mode may be selected by a (virtual) button 11, whereas a second (virutal) button 12 may serve for selecting a second operating mode. As shown in Figure 1 the motor is controlled by a converter 17.

Figure 2 shows an illustration of components of a motor. More precisely Figure 2 shows a longitudinal section of a motor. Thereby a plurality of motor components become visible. An electro-mechanical device such as a motor, may comprise a shaft 21, a rotor 22, a stator 23 and/or a housing 24.

Due to its operation principles, a motor encounters energy losses in the windings 25 and the rotor 22 as an electrical current flows through them, and in the stator iron (core) 23 and rotor due to electromagnetic phenomena (e.g., hysteresis and eddy currents) as well as energy losses due to current flow. Additionally, relative motion between the components of the bearing assembly result in some energy losses due to friction.

Excessive or anomalous operation of the motor could lead to high levels of energy losses and undesired rise in temperature, which could be alarming to the performance and lifetime of critical components, such as the bearings and the windings. It is thus desired to provide an accurate simulation model of the motor in order to monitor and/or control its operation. To that end, a plurality of simulation models may be combined. For example, a simulation model for calculating the heat transfer from the mentioned heat sources to other bodies (e.g., shaft and housing) of the motor and a simulation model for precisely calculating the thermal losses at each given heat source based on the operating parameters may be combined.

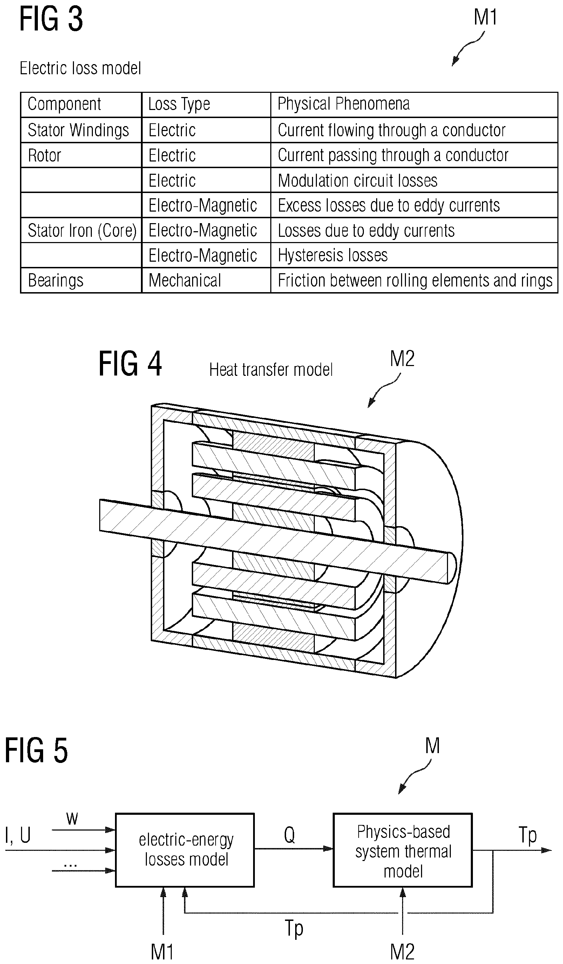

Figure 3 shows a simulation model M1 of a motor, wherein the simulation model M1 describes an electrical loss. The electric losses of the motor may be described numerically based on the underlying physical phenomena as shown in Figure 3.

Figure 4 shows a further simulation model M2 of a motor, wherein the simulation model describes a heat transfer. The simulation model M2 comprises different heat transfer modes, such as conduction, convection and/or radiation. Conduction is observed between components of the motor and/or within the component(s) itself(themselves). Convection is observed at the outer surface(s) of the housing, shields, and/or the exposed part of the shaft. Through convection, heat energy may be dissipated to the environment.

The heat dissipation of the internal components of the motor may be modelled using conduction, while the outer surfaces may be modelled to dissipate heat energy to the environment via convection.

The dimensions of the internal components may be based on a CAD model of the electro-mechanical device. The simulation model M2 may thus be automatically generated by providing the dimensions from an engineering drawing of the electro-mechanical device. Thus, the simulation model, as shown, e.g., in Figures 3 and 4, may be parametric. Thereby the simulation model parameters may be adapted in order to fit to different variants of the motor, e.g., different sizes. To facilitate the simulation model parametrization, geometric details such as spatial features from CAD, may be used.

Further simulation model parameter, e.g., for the heat transfer, may comprise the material properties of a component (e.g., specific heat, density, and thermal conductivity), the mass/volume of the component, surface of heat transfer between components, heat transferred for a unit temperature difference per unit area, and/or area between the body and fluid through which heat is transferred, i.e., area exposed to the fluid flow.

It should be understood that some simulation model parameters depend on the motor's rotation speed and the load, or operation values in general.

Figure 5 shows a yet another simulation model M of a motor, wherein the simulation model M combines the electrical loss model M1 with the heat transfer model M2. As shown, the input to the heat transfer model are the thermal losses Q (also referred to electric-energy losses) at the respective components, and the output of the heat transfer model is a temperature measurement value Tp. Hence, based on the simulation model(s) M, M1, M2 a virtual measurement variable and corresponding measurement values may be obtained, for example at a predetermined position of the motor.

The inputs of the electric-energy loss model M1 may comprise dynamic parameters such as a rotational speed w of the shaft and/or a current I and voltage U supplied to the motor. Further dynamic inputs, such as the torque-forming current, to the electric-energy loss model M1 are possible. Furthermore, static inputs such as one or more (linear) coefficients may be possible. In any case the simulation model M may depend on these parameters for modelling the behavior of the motor, e.g., linearly or using higher-order polynomials. For example, Siemens proffers a simulation platform "Simcenter Amesim", which allows system simulations in order to virtually assess and optimize the performance of e.g., electro-mechanical systems. Such a simulation platform may combine multi-physics libraries for creating simulation models M in order to accurately perform a system analysis. This simulation platform can be coupled with computer-aided engineering (CAE), computer-aided design (CAD), and controls software packages of the electro-mechanical system.

The thermal losses model M1 (also referred to as electric-energy loss model) may require rotor and stator temperatures Tp. These operating values may be obtained, e.g., from reading the motor's parameters, e.g., r632 and r633 parameters from SINAMICS. Alternatively, or additionally, the respective temperature Tp could be obtained from the thermal model M2 as shown.

As shown in Figure 5 the electric-energy loss model M1 is interconnected with the physics-based thermal model M2. The electromagnetic losses model M1 calculates the thermal losses using the frequency converter input. As illustrated the rotational speed w, current I and voltage U are combined with the geometric and/or material properties, e.g., from the motor data sheet, and the temperature field Tp from the thermal model. Out of the electromagnetic losses the model M1 can estimate the heat generation (heat load, Q) within the motor. Q is the input for the thermal model M2, which can calculate the temperature distribution in the model.

Both simulation model(s), such as the thermal losses model M1 and the heat transfer model M2, may be packed in a so-called FMU, Functional Mock-Up Unit, format in order to be deployed and/or executed. The input and outputs of the simulation model(s) (thermal losses & temperatures) may be placed as outputs and inputs to an FMU interface.

In any case, the simulation model-based virtual sensors may not be used for monitoring without the exact knowledge of the required geometric data. The simulation models have to be verified against measured data and therefore the rollout may take prolonged time. Furthermore, the quality of the parameterization of the motor may be rather inaccurate and thus the parameters obtained from the motor itself may be unreliable. Thus, usually and whenever possible and financially sensible, physical sensors have been used in order to determine a motor's condition.

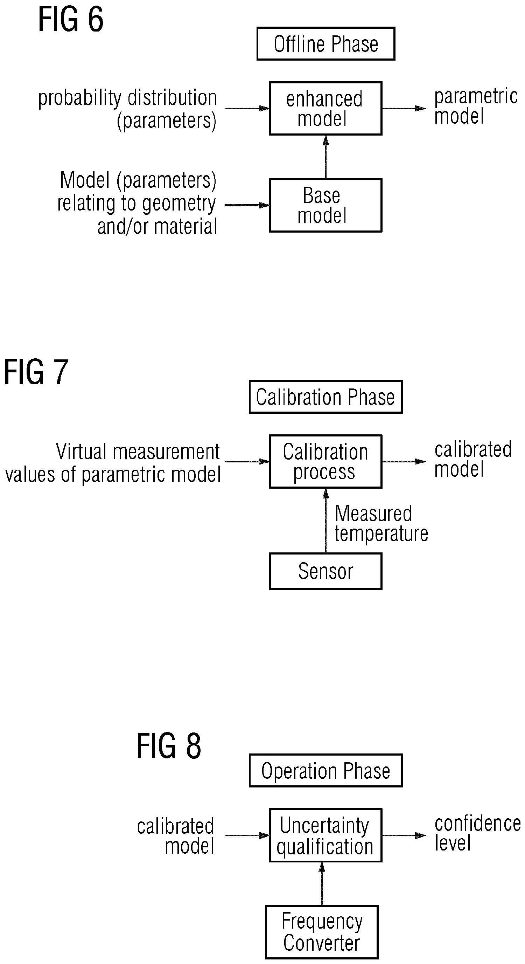

Figure 6 shows exemplary method steps according to a first embodiment, i.e., during an offline phase. A simulation model is created based on simulation model parameters relating to the geometry and/or material of the motor. These parameters and their values may be known from the data plate or a data sheet of the motor. For example, the simulation model as described in connection with Figures 3, 4 and/or 5 may be used. Thus, a base model is enhanced with the simulation model parameters' specific values. As a result, an enhanced model is obtained. Now, one or more of the simulation model parameters may be represented by assigning a probability distribution to the one or more simulation model parameters. Here, the probability distribution corresponds to a prior distribution. The probability distribution may be a distribution of a certain type, such as a Gaussian distribution or Poisson distribution. The probability distribution itself may be parameterized by setting the statistical moments, such as the mean value, the variance or standard deviation, of the respective simulation parameter. The statistical moment(s) may be obtained from the motor manufacturer, the component manufacturer, and/or known from experience and may be due to the variation in the production of the motor or motor component. For example, material properties (of a component) are subject to variation. As a result, a parametric simulation model is obtained.

Figure 7 shows exemplary method steps according to a second embodiment, i.e., during a calibration phase of the simulation model. To that end, the position of the virtual measurement variable may be chosen to coincide with the position of the one or more actual sensors. Now, the parametric simulation model, may be calibrated. For example, to calibrate the convection coefficients in the simulation model, (reference) sensors mounted on both bearings near the outer rings, on each wiring phase at the winding ends, and/or at the housing to measure the ambient temperature may be used. Then, different load cases are applied to the motor, with variant speeds and torques. Based on the actual measurements, the convection coefficients of the simulation model can be adjusted in order to achieve a minimal difference between the simulated temperature values and the actual measurement values.

As shown in Figure 7, one or more virtual measurement values are obtained as an output of the parametric model. In addition, (real) measurement values are measured at one or more positions by a (reference) sensor on the motor. The (real) measurement values then are compared to their corresponding virtual measurement values obtained from the simulation.

For the calibration, the difference between the (real) measurement values and the virtual measurement values are determined in order to adapt the simulation model parameters and/or the probability distribution parameters accordingly. This adaptation may be performed incrementally until the difference is below a pre-determined threshold.

During the calibration, information about uncertainty in the simulation model parameters, e.g., geometrical and material tolerances, is retained. Those uncertainties, reflected by the probability distribution (parameters), may be updated based on the actual measurement values in order to obtain the most likely simulation model parameters. To that end, an (inverse) uncertainty quantification is employed, also referred to as inverse Bayesian analysis. An inverse uncertainty quantification is based on actual measurement values, in this case of an electro-mechanical device, and the simulation model results, i.e., the virtual measurement values. The inverse uncertainty quantification estimates the discrepancy between the actual measurements and the virtual measurement values of the simulation model, and estimates the most likely simulation model parameters (and their respective values). Hence, this phase is called calibration phase. Thus, a calibration phase is proposed, which can provide a calibrated simulation model, and a corresponding uncertainty quantification mechanism. Hence, a simulation model may be created, using for example only the information provided by the frequency inverter, that controls the motor, as depicted in Figure 1. This simulation model may be used to calculate the virtual measurement variables, such as temperatures, of one or more critical components and/or at one or more predetermined positions.

Figure 8 shows exemplary method steps according to a third embodiment, i.e., an operation phase. After the calibration phase, the updated simulation model, i.e., calibrated model, is obtained. The calibrated model may be used as a virtual sensor. The virtual sensor provides virtual, i.e., simulated, measurement values. In addition, the virtual sensor may provide a related confidence level, or confidence interval, for measurement variables, such as temperatures, of interest. A confidence interval may be obtained by considering an uncertainty in the simulation model parameters (which result from the calibration phase). The uncertainties in the virtual measurement variable may be obtained based on an uncertainty propagation.

Hence, the temperature at arbitrary positions, e.g., at one or more predetermined positions, of an electro-mechanical device, e.g., in a motor, can be calculated. To that end, no initial and/or precise knowledge of the required simulation model parameters such as geometry and/or material properties is required. In fact, the uncertainty of the simulation model parameters is given by a probability distribution. Based on this probability distribution virtual measurement variables and corresponding values may be determined using the simulation model.

It should be understood that the motor as described herein is just an exemplary electro-mechanical device. Other electro-mechanical devices may comprise a generator, a relay, a pump, an electrified vehicle, an aircraft, a ship, or a train.

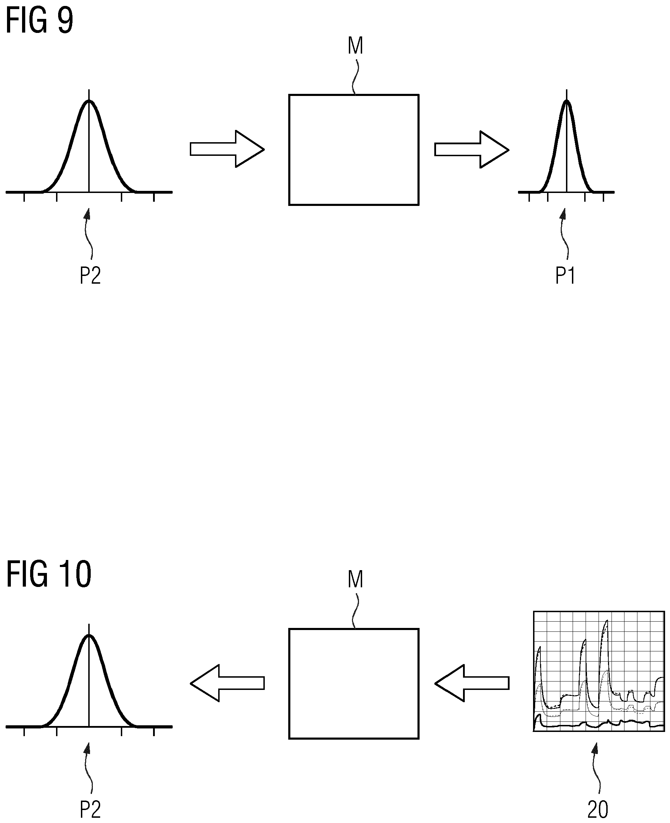

Figure 9 shows an illustration of propagation of uncertainty through a simulation model M (forward model). This uncertainty propagation may be used when calibrating the simulation model M, e.g., as described in connection with Figures 3, 4 and/or 5. A first probability distribution P1 may be obtained. The first probability distribution P1 may be understood as a response of the simulation model M to a second probability distribution P2 that serves as input for the simulation model M. The probability distribution P1 may be inferred from a set of observed model responses to the input. The probability distribution P1 and/or P2 may be of a certain type, e.g., Gaussian, and may be given/identified by its mean value and its variance and/or further statistical moments. The probability distributions can then be fitted.

The second probability distribution may be initially parameterized, e.g., based on expert knowledge. For example, the second probability distribution may be a Gaussian distribution with mean value and variance. The expert knowledge may be reflected in this initial parameterization by setting a variance of the distribution describing the simulation model parameter according to past experience and/or examined properties. For example, it may have been observed that the material properties deviate from the originally provided values to a certain degree.

Figure 10 shows an illustration of an inverse Bayesian analysis. Here, a second probability distribution is inferred from a set of (real) measurement values 20. Thus, a most probable value of a simulation model parameter may be determined. These optimized simulation model parameters can be used for updating the simulation model, thus yielding an optimized simulation model. Subsequently, when the simulation model is in operation, one or more anomalies may be determined (based on the confidence level of the virtual measurement value(s)) and thus the operation of the electro-mechanical device may be controlled.

The simulation model calibration serves for determining unknown or uncertain properties of the electro-mechanical device and/or of one or more of its components. The calibration can be performed based on the (real) measurement values from a (reference) sensor. The reference sensor may be located at a known position of the electromechanical device, as for example shown in Figure 2.

After the calibration phase, the inferred simulation model parameters (and corresponding values) and for example the uncertainty of the inferred simulation model parameters may be used to determine the behavior of the electro-mechanical device, i.e., determine virtual measurement variable at a pre-determined position (other than the one of the (reference) sensor).

In general, the simulation model may be understood as a computational model. The simulation model may output one or more (virtual) measurement values of a virtual measurement variable. The virtual measurement variable may not be directly measurable by an actual sensor due to the equipment, structure and/or assembly of the electro-mechanical device. The simulation model may calculate virtual measurement values based on input values. The input value(s) may be the currently available operating values of the electro-mechanical device. As described, the currently available operating values may be obtained from the electro-mechanical device, such as a motor and/or converter.

There may be a discrepancy between the actual measurement values and the virtual measurement values. This discrepancy is interpreted as a simulation model inaccuracy. The discrepancy can be minimized by finding the simulation model parameters that best fit the actual measurement values. Thus, the actual measurements are inverted through the simulation model M. As a result, a posterior, second probability distribution P2 may be obtained. The statistical moments, such as mean and/or variance, of the posterior, second probability distribution can be interpreted as point estimates of the simulation model parameter. i.e., a most probable value of the simulation model parameter. Thus, the second probability distribution P2 and/or the most probable value of the simulation model parameter may be used for determining virtual measurement values of a virtual measurement variable. To that end, the second probability distribution and/or the most probable value of the simulation model parameter(s) may be used to (re-)parameterize the simulation model (again) in order to determine virtual measurement values of a virtual measurement variable.

Now in order to determine the updated second probability distribution a type of probability distribution, such as a Gaussian distribution, and/or a parameterization thereof, such as a mean value and variance, may be specified. This probability distribution may be an input object, e.g., of the UQLab software. The simulation model may also be created, e.g., using the UQLab software, as a so-called m-file. Finally, the actual measurements from a (reference) sensor may be obtained and for example stored in matrix form. Subsequently, an inverse Bayesian analysis can be performed, e.g., again using UQLab software by calling the function uq_createAnalysis(). As a result of the inverse Bayesian analysis updated simulation model parameters may be obtained. The updated simulation model parameters may be given by the updated second probability distribution P2 and its parameters, such as updated mean, variance, and/or other statistical moments. Furthermore, e.g., for the sake of visualization, the second probability distribution can be fitted and/or plotted. In any case, the second probability distribution may be given by a type of probability distribution, such as Gaussian, and the corresponding one or more statistical moments.

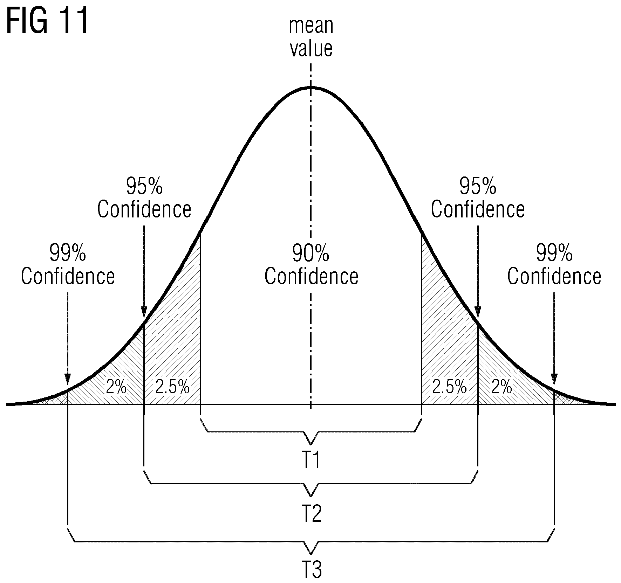

Figure 11 shows an illustration of confidence levels T1, T2, T3. A confidence level, e.g., a confidence interval, for the virtual measurement variable can be determined based on the first probability distribution. The confidence level indicates a level of accuracy that the true value of the virtual measurement variable is within the confidence interval. Thus, a reliability of the simulation model and the virtual measurement variables obtained as an output of the simulation model is obtained. Figure 11 shows the distribution of (virtual) measurement values around a mean value. The virtual measurement values may be obtained based on the simulation model. As shown in Figure 11, different confidence levels T1, T2, T3 are possible. A user may select a confidence level according to a desired accuracy for monitoring the electro-mechanical device. For example, the confidence level may correspond to a confidence interval of, e.g., 90%, 95% or 99%.

For example, after the calibration phase, the updated simulation model (of the electro-mechanical device) is used as a virtual sensor and yields simulated values and related confidence intervals for critical temperatures of interest, e.g., based on the operating values of the electro-mechanical device such as speed, current and/or voltage. The confidence intervals may be obtained by considering the uncertainties in the simulation model parameters (which result from the calibration phase) within appropriate uncertainty propagation methods. The confidence level or confidence interval may for example be estimated based on a discrepancy function between the simulation model output and the actual measurement value determined during the calibration phase. Hence, a confidence level may be provided as a quantification of the uncertainty of the virtual measurement variable and/or its values. The confidence level may be understood as the percentage of the intervals that contain a virtual measurement value.

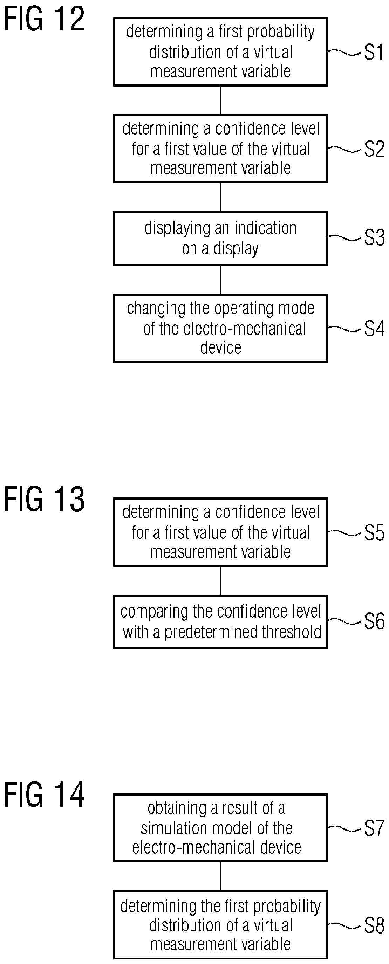

Turning to Figure 12, method steps according to an exemplary embodiment are shown. The method steps may be computer-implemented and may serve for monitoring and/or controlling an electro-mechanical device, such as an electrical motor and/or generator.

In a step S1 a first probability distribution of a virtual measurement variable may be determined. The virtual measurement variable may be a temperature at a predetermined position, of the electro-mechanical device.

In a step S2, a confidence level for a first value of the virtual measurement variable may be determined for example based on the first probability distribution.

In a step S3, an indication may be displayed on a display, e.g., of the electro-mechanical device or a device communicatively coupled to the elector-mechanical device, for example, a computer-display. The indication may instruct a user to change the operating mode of the electro-mechanical device.

In a step S4, the operating mode of the electro-mechanical device may be changed based on the confidence level. It should be understood that step S3 may be optional and that the change of the operating mode may be automatically performed based on the confidence level, e.g., in case the confidence level exceeds a predetermined threshold, for example is lower than 90%, 95% or 99%.

The confidence level and the indication of the confidence level displayed comprises information about the accuracy of the virtual measurement variable and the virtual measurement value(s). The confidence level thus reflects the reliability of the virtual measurement value(s) and may serve for controlling the operation of the electro-mechanical device, i.e., for controlling the operating mode of the electro-mechanical device. For example, the electro-mechanical device may be operated in a failsafe operating mode, or with lower power in case the confidence level is exceeded.

Turning to Figure 13, further method steps according to an exemplary embodiment are shown. In a step S5, for example after step S1, a confidence level for a first value of the virtual measurement variable may be determined. Hence, a confidence level for each of a plurality of virtual measurement values of one or more virtual measurement variables may be determined. In a step S6, the confidence level may be compared with a predetermined threshold, e.g., 99%, 95% or 90%. The confidence level may be understood, as described herein, as the probability of exceeding a deviation from a mean (virtual measurement) value of the virtual measurement variable (at a predetermined position). Subsequently, the operating mode of the electro-mechanical device may be changed and/or an indication may be displayed in case the predetermined threshold is exceeded, for example as described before in particular in connection with step S3 and/or S4.

Turning to Figure 14, further method steps according to an exemplary embodiment are shown. In a step S7, a result of a simulation model of the electro-mechanical device is obtained. Thus preferably, a plurality of virtual measurement values is obtained as a result of the simulation model. The simulation model preferably representing a thermal behavior of the electro-mechanical device and/or an electric-loss behavior of the electro-mechanical device. The simulation model may thus be executed, for example in the calibration phase and/or the operation phase, for a plurality of operating conditions comprising different operating values, e.g., of rotational speed, current and/or voltage, of the electro-mechanical device. As a result, a first probability distribution may be determined, e.g., in the calibration phase, for example by fitting a curve to the results obtained. Thereby, a (continuous) probability distribution for the virtual measurement variable may be obtained.

Furthermore, the first measurement value may be obtained as a result of the simulation model of the electro-mechanical device in a step S8, for example in the operation phase. The first measurement value of the virtual measurement variable may be obtained by inputting one or more currently available operating values of the electro-mechanical device into the simulation model. To that end, the currently available operating values may be obtained from the electro-mechanical device. For example, the operating values of the electro-mechanical, such as rotational speed, current and/or voltage, may be obtained from a motor and/or generator and or converter coupled thereto. Based on these current operational values which may serve as input for the simulation model the first measurement value may be obtained as an output or result of the simulation model. Thus, the simulation model may comprise simulation model parameters representing the geometric properties and/or material properties of the electro-mechanical device. At least a part of these geometric and/or material properties may be modelled by a respective second probability distribution.

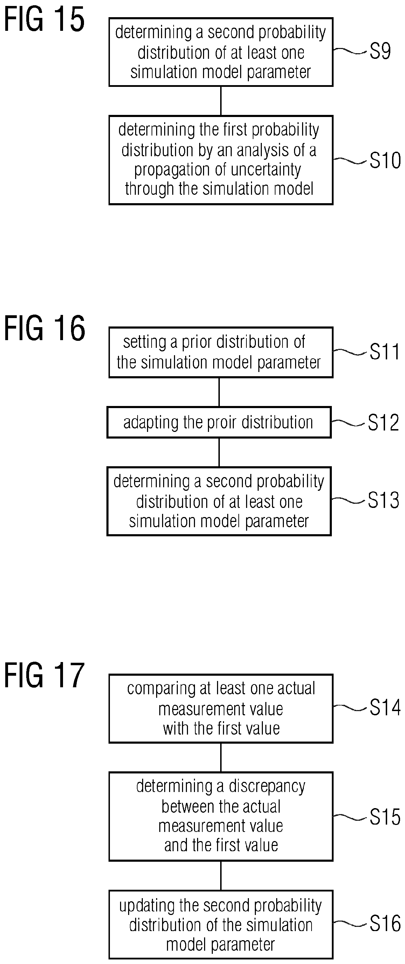

Turning to Figure 15, in a step S9 a second probability distribution of at least one simulation model parameter may be determined. The simulation model parameter is thus itself modelled as a probability distribution. As the case may be, a plurality if not all of simulation model parameters may be modelled by their respective probability distribution. It should be understood that nonetheless some simulation model parameters may also be constants. In order to obtain the second probability distribution in the first place, an appropriate probability distribution, such as a Gaussian distribution, Poisson distribution or the like, may be chosen that reflects the behavior of the simulation parameter. For example, in case of the thermal model of the electro-mechanical device the probability distribution may reflect a manufacturing error or a manufacturing deviation, e.g., an impurity, of a material used for building the electro-mechanical device.

Now, for example in the offline phase and/or the calibration phase, the first probability distribution may be obtained by an analysis of a propagation of uncertainty through the simulation model in a step S10. Thereby the effect of a simulation model parameter's uncertainty on the uncertainty of result the simulation model, i.e., the virtual measurement variable, may be obtained. To that end, a second probability distribution and/or one or more statistical moments, such as the mean, the variance, the skewness and/or the kurtosis, of the second probability distribution may be determined.

Turning to Figure 16, further methods steps of an exemplary embodiment are described. In a step S11, a prior distribution of the simulation model parameter may be set, for example in the offline phase. As described, the prior distribution (type) may be chosen appropriately to reflect the (statistical) properties of the simulation model parameter(s). In a step S12, the prior distribution may be adapted by setting the mean value and/or the variance of the prior distribution describing the simulation model parameter. As a result, the second probability distribution is obtained in asset S13.

Turning to Figure 17, further methods steps of an exemplary embodiment are described. In a step S14, for example in a calibration phase, at least one actual measurement value is compared with the first value. The actual measurement value may be obtained by a sensor attached to the electro-mechanical device. The sensor may be attached at a known position, e.g., a coiling head, of the electro-mechanical device. Hence, the predetermined position at which the virtual measurement variable is measured may be (essentially) the same as the position of the sensor. Thus, the sensor serves as a reference sensor during a calibration phase of the simulation model. It should be understood that the sensor may also only be temporarily attached to the electro-mechanical device to provide the actual measurement values as a reference for the virtual measurement variable(s).

In a step s15, a discrepancy between the actual measurement value and the first value may be determined, for example by determining a difference. In a step S16, the second probability distribution of the simulation model parameter and/or determining a most probable value of the simulation model parameter may be updated. To that end, the update may be based on the discrepancy, which represents the simulation model error or inaccuracy.

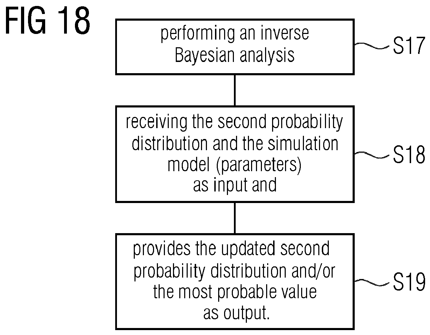

Turning to Figure 18, further methods steps of an exemplary embodiment are described. In a step S17, preferably in the calibration phase an inverse Bayesian analysis is performed, e.g., in order to update the second probability distribution. The inverse Bayesian analysis may be based on the second probability distribution, the simulation model (parameters) and the actual measurement value(s). The inverse Bayesian analysis may be performed using a software application, such as UQLab, which receives the second probability distribution, the simulation model (parameters) and the actual measurement value(s) as input and provides the updated second probability distribution and/or the most probable value of the simulation model parameter(s) as output.

The updated, second probability distribution and/or the most probable value of the simulation model parameter(s) may then serve for (re-)paramterizing the simulation model of the electro-mechanical device. Hence, an optimized simulation model of the electro-mechanical device is obtained, that can be used for controlling and/or monitoring of the electro-mechanical device, preferably in the operation phase, i.e., during the operation of the electro-mechanical device.

The calibration phase is in particular advantageous for the calibration of the simulation model in order to initially adapt the simulation model. The calibration phase may also be advantageous in order to adapt the simulation model from one electro-mechanical device to another electro-mechanical device. The calibration phase may also be advantageous in order to adapt an electro-mechanical device with changed thermal behavior of the electro-mechanical device and/or an electric-loss behavior, e.g., after a replacement or maintenance. The calibration phase may also be advantageous in order to adapt the simulation model regularly, event-based or upon user initialization during the operation of the electro-mechanical device, since the geometric and/or thermal properties of the electro-mechanical device may change during its lifetime due to tear, wear, abrasion and/or erosion.

The inverse Bayesian analysis propagates the actual measurement values backwards in order to obtain information about the simulation model inputs, in the present case about the second probability distribution and the simulation model parameters described by the second probability distribution.

In a further embodiment a computer program product for monitoring and/or controlling an electro-mechanical device obtained by one or more of the method steps as described herein is proposed.

## Claims

1. A, preferably computer-implemented, method of monitoring and/or controlling of an electro-mechanical device (10), such as an electrical motor and/or generator, comprising the steps of:
determining a first probability distribution (P1) of a virtual measurement variable (V1), e.g., temperature at a predetermined position, of the elctro-mechanical device (10),
determining a confidence level for a first value of the virtual measurement variable (V1) based on the first probability distribution (P1),
changing an operating mode (11, 12) of the electro-mechanical device (10) based on the confidence level and/or displaying an indication (13) on a display (14), the indication (13) instructing a user to change the operating mode (11, 12) of the electro-mechanical device (10).

2. Method according to the preceding claim,
comparing the confidence level with a predetermined threshold (T1, T2, T3), and
changing the operating mode (11, 12) and/or displaying the indication (13) in case the predetermined threshold (T1, T2, T3) is exceeded.

3. Method according to any one of the preceding claims, obtaining the first value of the virtual measurement variable (VI, V2) as a result of a simulation model (M) of the electro-mechanical device (10), the simulation model preferably representing a thermal behavior (M1) of the electro-mechanical device and/or an electric-loss behavior (M2) of the electro-mechanical device (10).

4. Method according to any one of the preceding claims, wherein the simulation model (M) comprises simulation model parameters representing the geometric properties and/or material properties of the electro-mechanical device (10).

5. Method according to any one of the preceding claims, determining a second probability distribution (P2) and/or corresponding statistical moments of at least one simulation model parameter of the electro-mechanical device (10), and determining the first probability distribution (P1) by an analysis of a propagation of uncertainty of the second probability distribution (P2) through the simulation model.

6. Method according to any one of the preceding claims, the step of determining the second probability distribution (P2) of the simulation model parameter comprises setting a prior distribution of the simulation model parameter.

7. Method according to any one of the preceding claims, wherein the step of determining the second probability distribution (P2) comprises adapting the prior distribution based on a plurality of, e.g., measured and/or otherwise input, values of the simulation model parameter, e.g., by fitting the prior distribution to the plurality of values of the simulation model parameter.

8. Method according to any one of the preceding claims, further comprising the step of
calibrating the simulation model (M) of the electro-mechanical device (10) by comparing at least one actual measurement value of a sensor (S1) attached to the electro-mechanical device (10), e.g., at a known position, e.g., a coiling head, with the first value.

9. Method according to any one of the preceding claims, wherein the step of calibrating comprises:
determining a discrepancy between the actual measurement value and the first value, and updating the second probability distribution (P2) of the simulation model parameter and/or determining a most probable value of the simulation model parameter based on the discrepancy.

10. Method according to any one of the preceding claims, wherein the step of updating the second probability distribution (P2) comprises performing an inverse Bayesian analysis, preferably based on the second probability distribution (P2) and the simulation model (parameters), and for example using a software application, such as UQLab, which receives the second probability distribution (P2) and the simulation model (parameters) as input and provides the updated second probability distribution (P2) and/or the most probable value of the simulation model parameter as output.

11. Use of the method according to any one of the preceding claims for monitoring and/or controlling the electro-mechanical device (10), preferably during the operation of the electro-mechanical device (10).

12. Use of the method according to the preceding claim, wherein the calibration of the simulation model (M) according to claims 8-10 is performed for another electro-mechanical device and/or for an electro-mechanical device with changed thermal behavior of the electro-mechanical device and/or an electric-loss behavior, e.g., after a replacement or maintenance.

13. Use of the method according to the preceding claims 11-12 wherein the calibration of the simulation model (M) is performed in case a deviation between the actual measurement value of a sensor (S1) attached to the electro-mechanical device, e.g., at a known position, e.g., a coiling head, and the first value of the virtual measurement variable exceeds a predetermined threshold.

14. Apparatus, preferably comprising a processor and a memory, for performing the method according to any one of the preceding claims.

15. A, preferably non-transitory, computer readable medium, comprising program code that when executed performs the method steps of any one of the preceding claims 1-13.
